# EUROPEAN PATENT APPLICATION

(11) **EP 2 960 260 A1**
(43) Date of publication of application: **30.12.2015**
(21) Application number: 14173489.7
(22) Date of filing: 23.06.2014
(51) Int. Cl.: C08F 118/08, C08F 218/08

(54) **Vinyl acetate (co)polymers**

(71) Applicant: Henkel AG&Co. KGAA, 40589 Düsseldorf (DE); Henkel Chile S.A., Santiago (CL)
(72) Inventor: Pavez, Roberto, Santiago (CL); Beck, Horst, 41470 Neuss (DE); Heredia, Juan, Santiago (CL)

(57) **Abstract**

The present invention relates to methods for the production of vinyl acetate polymer or vinyl acetate acrylic copolymer, comprising polymerizing a mixture of monomers in an oxygenated organic solvent and in the presence of a catalyst, the monomer mixture comprising 20.0 to 99.9 wt.-%, preferably 60.0 to 99.7 wt.-%, vinyl acetate monomer; optionally 2.0 to 30.0 wt.-%, preferably 2.0 to 10.0 wt.-%, of at least one copolymerizable acrylic monomer; and 0.01 to 15.0 wt.-% of at least one copolymerizable crosslinking monomer having (a) at least two ethylenically unsaturated groups, preferably at least two vinyl groups, or (b) at least one ethylenically unsaturated group and at least one hydrolyzable group, or (c) at least two hydrolyzable groups. Also encompassed are the vinyl acetate polymers/vinyl acetate acrylic copolymers, adhesive formulations containing them and their use as adhesives.

## Description

The present invention relates to vinyl acetate polymers and vinyl acetate acrylic copolymers as well as methods for their manufacture. The invention also relates to adhesive composition comprising the vinyl acetate polymers or vinyl acetate acrylic copolymers and use of the vinyl acetate polymers and vinyl acetate acrylic copolymers.

Contact adhesives are widely used in the art and are versatile adhesives used for many different applications, including but not limited to furniture, veneers, shoes, carpets and the like. However, many known contact adhesives are based on polychloroprene that, due to its high solvent contents, is usually not a very sustainable product. In fact, most of the solvents used for such adhesives are not in compliance with existing volatile organic compounds (VOC) regulations (e.g. South Coasts Air Quality Management District, SCAQMD, Rule 1168). Although water-based chloroprene rubbers (CR) have been developed, their performance is lacking and they require longer drying times. In addition, they still contain chlorine that is for environmental and toxicological reasons undesirable.

Other alternatives that have been reported include styrene-butadiene-styrene (SBS) rubbers. However, such systems still need non-sustainable solvents such as toluene or hexane, as their performance is insufficient for highly demanding bonding processes.

While polyurethane dispersions are known to provide for good alternatives, their use is limited to certain applications, in particular the shoe industry on an industrial scale.

Thus, there remains need in the art, for alternative adhesives that can overcome the known drawbacks and provide for sustainable adhesive systems with a good performance.

The present invention is based on the inventors' finding that the above need can be met by an adhesive system that comprises certain vinyl acetate polymers or vinyl acetate acrylic copolymers in oxygenated organic solvents. Such an adhesive system is less toxic than existing systems in that VOC emissions can be reduced, it exhibits a very good performance on most materials, can be produced with high solid contents and on the basis of renewable raw materials. As the adhesive itself contains higher amounts of solids, less solvent is for its production is needed.

In a first aspect, the present invention is thus directed to a method for the production of vinyl acetate polymers or vinyl acetate acrylic copolymers comprising polymerizing a mixture of monomers in an oxygenated organic solvent and in the presence of a catalyst to form a vinyl acetate polymer or vinyl acetate acrylic copolymer, the raction mixture comprising based on the total weight of the mixture
(i) 20.0 to 99.9 wt%, preferably 60.0 to 99.7 wt.-%, particularly preferred 60.0 to 70.0 wt.-%, vinyl acetate monomer;
(ii) optionally 2.0 to 30.0 wt%, preferably 2.0 to 10.0 wt.-%, of at least one copolymerizable acrylic monomer; and
(iii) 0.01 to 15.0 wt%, preferably 0.1 to 5.0 wt%, particularly preferred 0.2 to 0.8 wt.-%, of at least one copolymerizable crosslinking monomer having (a) at least two ethylenically unsaturated groups, preferably at least two vinyl groups, or (b) at least one ethylenically unsaturated group and at least one hydrolyzable group, or (c) at least two hydrolyzable groups.

The above percentages relate to the total reaction mixture, i.e. are wt.-% relative to the total weight of the reaction mixture, including monomers, oxygenated organic solvent and catalyst. The properties of the resulting polymer may be modified by varying the monomer types, amounts and ratios.

In a second aspect, the present invention relates to a vinyl acetate polymer or vinyl acetate acrylic copolymer obtainable according to a method of the first aspect.

In a third aspect, the present invention relates to an adhesive composition comprising a vinyl acetate polymer or vinyl acetate acrylic copolymer of the second aspect.

In a fourth aspect, the present invention relates to the use of a vinyl acetate polymer or vinyl acetate acrylic copolymer according to the first aspect as an adhesive.

"At least one", as used herein, means one or more, i.e. 1, 2, 3, 4, 5, 6, 7, 8, 9 or more of the referenced species. Similarly, "one or more", as used herein, relates to at least one and comprises 1, 2, 3, 4, 5, 6, 7, 8, 9 or more. In connection with a given species, the term does not relate to the total number of molecules, but rather to the type of species. "At least one copolymerizable acrylic monomer", for example, thus means that one type of copolymerizable acrylic monomer or two or more different types of copolymerizable acrylic monomers may be present. In connected with amounts, the term relates to the total amount of the referenced species. In case of the copolymerizable acrylic monomer, for example, this means that the given amount is the total amount of all copolymerizable acrylic monomers in the monomer mixture.

"About", as used herein, relates to ± 20 %, preferably ± 10 % of the numerical value to which it refers. "About 200" thus relates to 200 ± 40, preferably 200 ± 20.

Advantageously, the vinyl acetate polymers or vinyl acetate acrylic copolymers disclosed herein may be used for manufacture of high performance adhesives, while still providing for adhesives with good sustainability, which are VOC free or have a substantially reduced VOC content. In addition, the vinyl acetate polymers or vinyl acetate acrylic copolymers disclosed herein may have lower flash points compared to standard vinyl acetate (co)polymers.

The amount of vinyl acetate monomer in the mixture is in the range of about 20.0 to about 99.9 wt.-%. In various embodiments, the amount is in the range of about 50.0 to 99.8 wt.-%, preferably 60.0 to 99.7 wt.-%, particularly preferred 60.0 to 70.0 wt.-%. All given amounts relate to the total weight of the reaction mixture.

Optionally the monomer mixture may comprise at least one copolymerizable acrylic monomer, preferably in an amount of from about 2.0 wt.-% to about 30.0 wt.-%. In various embodiments, the mixture of monomers comprises about 2.0 wt.-% to about 20.0 wt.-%, preferably about 2.0 to about 10 wt.-% of copolymerizable acrylic monomers. All given amounts relate to the total weight of the reaction mixture.

In various embodiments, the at least one copolymerizable acrylic monomer is selected from alkyl(meth)acrylates. Preferably, number of carbon atoms in the alkyl group of the alkyl(meth)acrylate is in the range of 1 to 20, such as 5 to 20, 10 to 20, 15 to 20, 1 to 15, 1 to 10, 1 to 5, 5 to 8, 6 to 10, or 8 to 15. In some embodiments, the alkyl(meth)acrylate is selected from the group consisting of methyl(meth)acrylate, ethyl(meth)acrylate, butyl(meth)acrylates, such as tert-butyl(meth)acrylate or n-butyl (meth)acrylate, iso-octyl(meth)acrylate, 2-ethylhexyl(meth)acrylate, and mixtures thereof.

In various embodiments, the monomer mixture can also include at least one vinyl silane. This may be present in the monomer mixture preferably in an amount of from 0.01 wt.-% to about 10.0 wt.-%, preferably in an amount of from about 0.1 to about 1 wt.-%, more preferably about 0.3 to about 0.4 wt.-%. All given amounts relate to the total weight of the reaction mixture.

In various embodiments, the at least one vinyl silane monomer is selected from those having the general formula H₂C=CH-SiR₃ with R being any suitable substituent, for example H, alkyl or alkoxy. In various embodiments, the vinyl silane monomer is a vinyltrialkoxysilane, such as vinyltrimethoxysilane or vinyltriethoxysilane. Also suitable are mixtures of the described vinyl silanes.

In other embodiments, the monomer mixture does not contain vinyl silanes.

Vinyl silanes having at least one hydrolyzable group qualify as the at least one copolymerizable crosslinking monomer described below.

The at least one copolymerizable crosslinking monomer having at least two ethylenically unsaturated groups, preferably at least two vinyl groups, or having at least one ethylenically unsaturated group and at least one hydrolyzable group or at least two hydrolyzable groups is present in amounts of from about 0.01 to 15.0 wt.-%, preferably 0.1 to 5.0 wt.-%, particularly preferred 0.1 to 1.0 wt.-%, more preferably 0.2 to 0.8 wt.-%. All given amounts relate to the total weight of the reaction mixture.

In various embodiments, the crosslinking monomer can be any compound that has at least two ethylenically unsaturated double bonds and is copolymerizable with the other monomers. Preferred are monomers having at least two vinyl and/or allyl groups, including various acrylates or vinyl/allyl alcohol esters. In one preferred embodiment, the crosslinking monomer is diallylphthalate.

In other embodiments, the crosslinking monomer is a compound having at least one ethylenically unsaturated double bond and at least one hydrolyzable group. In still another embodiment, the crosslinking monomer is a compound having at least two hydrolyzable groups.

Exemplary compounds include, without limitation, vinylalkoxysilanes, such as vinyltrimethoxysilane, vinyltriethoxysilane, vinylmethyldimethoxysilane, or similar compounds having the general formula H₂C=C-(R¹ₙ)Si(OR²)₃₋ₙ, wherein R¹ = alkyl or aryl and R²= alkyl and n = 0 or 1.

In various embodiments, the monomer mixture does not comprise other monomers than those described above. In particularly preferred embodiments, no chlorinated monomers are used.

The mixture of monomers may be polymerized by free radical polymerization to form a vinyl acetate polymer or vinyl acetate acrylic copolymer. Exemplary polymerization initiators include organic azo or peroxo compounds. Suitable polymerization initiators are widely known in the art and readily available. In various embodiments, the polymerization initiator comprises or consists of 2,2'-azobisisobutyronitrile (AIBN). Other suitable initiators include redox initiators, which are widely used and well-known in the art.

The polymerization reaction is carried out in an oxygenated organic solvent, preferably an alcohol, ketone, ether or ester, selected from the group including but not limited to ethanol, acetone, methyl acetate, methyl ethyl ketone, ethyl acetate, dimethyl carbonate and mixtures of two or more thereof. The oxygenated organic solvent may originate from renewable sources and may, for example, be an alcohol from renewable sources.

The oxygenated organic solvent is preferably present in amounts of from about 0.08 to 40.0 wt.-%, preferably 15.0 to 40.0 wt.-%, particularly preferred 15.0 to 39.0 wt.-%, more preferably 20.0 to 39.0 wt.-%. All given amounts relate to the total weight of the reaction mixture.

The polymerization reaction may be carried out by using a mixture of starting monomers (i), (ii) and (iii), as defined above, and adding a radical initiator. Additional monomers that may optionally be added, such as further co-monomers or reactive monomers, can be added during the polymerization process.

The polymerization may be carried out at elevated temperature, preferably at about 70°C, for several hours, preferably 1 to 12 hours.

After the polymerization is complete, the solvent may be removed by applying heat and/or vacuum to the mixture. Different heating temperatures and/or vacuum settings may be suitable depending for example, on the solvent used. In various embodiments, the solvent is evaporated such that residual solvent content in the copolymer is between about 1 wt.-% to 35 wt.-%, preferably about 20.0 to 25.0 wt.-% relative to the reaction mixture.

After the polymerization is complete, remaining free monomers may be removed by applying heat and/or vacuum to the mixture. For this, suitable heating temperatures and/or vacuum settings may be applied depending on the type of monomer used, with such conditions being easily determinable for those skilled in the art.

The thus obtained polymers can be used in contact adhesives. Such adhesive formulations can additionally contain one or more components, such as auxiliaries, all of which are well known to those skilled in the art. In specific embodiments, these additional components are selected from fillers, thickeners, silane additives, colorants, perfumes, preservatives, resins and mixtures thereof. The adhesive compositions comprising the polymers of the invention exhibit very good adhesive properties while being substantially free of VOCs or having a reduced VOC content. Further, they have high solid contents and can be produced on the basis of renewable materials.

The thus obtained polymers can be used in pressurized containers, such as cans.

In the following the invention is described in more detail by reference to the examples. It is understood that these examples are for illustrative purposes only and that it is not intended that the invention is limited thereto.

### Examples

### Example 1: Exemplary Formulations

| **Formulation 1 (VOC compliant)** | **Amount (wt.-% relative to formulation)** |
|---|---|
| *Polymer formulation #1* | |
| Vinyl acetate monomer | 62.0 |
| Diallylphthalate | 0.3 |
| Acetone | 37.0 |
| Perkadox AIBN | 0.7 |
| | |
| *ADHESIVE FORMULATION* | |
| Polymer formulation #1 | 65.8 |
| Aerosil 200 | 1.0 |
| Magnesium Oxide | 0.2 |
| Phenolic Residue, Torrilene | 2.0 |
| Modified Indene-Coumarone resin, Novares CA80 | 1.0 |
| Methoxypropanole | 5.0 |
| Acetone | 25.0 |
| | |

| **Formulation 2 (high solid content)** | |
|---|---|
| *Polymer Formulation #2* | |
| Vinyl acetate monomer | 79.0 |
| Vinyl trimethoxysilane | 0.4 |
| Diallylphthalate | 0.3 |
| AIBN | 0.3 |
| MEK Luperox 78 | 10.0 |
| Ethylacetate | 10.0 |
| | |
| Viscosity | 260.000 cps |
| Solids | 81 wt.-% |
| | |

| **Formulation 3 (renewable raw materials)** | **Amount (wt.-% relative to formulation)** |
|---|---|
| Polymer formulation #3 | |
| Vinyl acetate | 61.0 |
| Diallylphthalate | 0.24 |
| Ethanol | 38.0 |
| Perkadox AIBN | 0.2 |
| | |
| ADHESIVE FORMULATION | |
| Polymer formulation #3 | 61.0 |
| Silicon Oxide | 1.0 |
| Magnesium Oxide | 0.2 |
| Colofonium | 4.8 |
| Ethanol | 23.0 |
| Acetone | 10.0 |
| | |

| **Formulation 4** | |
|---|---|
| Polymer formulation #4 | |
| Vinyl acetate monomer | 62.0 |
| Diallylphthalate | 0.2 |
| PERKADOX AIBN | 0.2 |
| Acetone | 20.5 |
| Ethyl acetate | 16.9 |
| | |
| ADHESIVE FORMULATION 4 | |
| Polymer formulation #4 | 60.3 |
| Aerosil 200 | 0.9 |
| Magnesium oxide | 0.1 |
| Torrilene 11321 | 3.5 |
| NOVARES CA 80 | 1.3 |
| Ethanol | 19.9 |
| Acetone | 9.0 |
| Methyl proxitol | 5.0 |

### Example 2: Performance

**Traction after 5 days in N/mm² (Press 5 N/mm²) on different materials**

| Materials | Standard I Formulation | Standard II Formulation | Competitor Formulation | Inventive Formulation (Adhesive Formulation 4) |
|---|---|---|---|---|
| Solid wood/solid wood (N/mm2) | 1,47 | 1,48 | 1,50 | 2,09 |
| MDF/Formica (N/mm2) | 0,38* | 0,40* | 0,48* | 0,55* |
| Metal/Wood (N/mm2) | 1,20 | 1,15 | 1,11 | 1,81 |
| Plywood/Plywood (N/mm2) | 1,26* | 1,12* | 1,20* | 0,94* |

| | | | | |
|---|---|---|---|---|
| *: substrate breakdown | | | | |

**Reactivation in N/mm² (Press 5 N/mm²)**

| Materials | Standard I Formulation | Standard II Formulation | Competitor Formulation | Inventive Formulation (Adhesive Formulation 4) |
|---|---|---|---|---|
| Wood/wood (N/mm2) | 1,35 | 1,24 | 1,26 | 1,41 |

## Claims

1. Method for the production of vinyl acetate polymer or vinyl acetate acrylic copolymer, comprising polymerizing a mixture of monomers in an oxygenated organic solvent and in the presence of a catalyst to form a vinyl acetate polymer or vinyl acetate acrylic copolymer, the reaction mixture comprising based on the total weight of the mixture
(i) 20.0 to 99.9 wt.-%, preferably 60.0 to 99.7 wt.-%, particularly preferred 60.0 to 70.0 wt.-%, vinyl acetate monomer;
(ii) optionally 2.0 to 30.0 wt.-%, preferably 2.0 to 10.0 wt.-%, of at least one copolymerizable acrylic monomer; and
(iii) 0.01 to 15.0 wt.-%, preferably 0.1 to 5.0 wt.-%, particularly preferred 0.2 to 0.8 wt.-%, of at least one copolymerizable crosslinking monomer having (a) at least two ethylenically unsaturated groups, preferably at least two vinyl groups, or (b) at least one ethylenically unsaturated group and at least one hydrolyzable group, or (c) at least two hydrolyzable groups.

2. The method according to claim 1, wherein the at least one copolymerizable crosslinking monomer is diallylphthalate, a vinylalkoxysilane or a mixture thereof, preferably diallylphthalate.

3. The method according to claim 2, wherein the vinylalkoxysilane comprises at least one vinyl trialkoxysilane, preferably vinyl trimethoxysilane or vinyl triethoxysilane.

4. The method according to any one of claims 1 to 3, wherein the at least one copolymerizable acrylic monomer is selected from alkyl(meth)acrylates, the number of carbon atoms in the alkyl group of the alkyl(meth)acrylate preferably being in the range of 1 to 20, the alkyl(meth)acrylate more preferably being selected from the group consisting of methyl(meth)acrylate, ethyl(meth)acrylate, butyl(meth)acrylates, iso-octyl(meth)acrylate, 2-ethylhexyl(meth)acrylate, and mixtures thereof.

5. The method according to any one of claims 1 to 4, wherein the oxygenated organic solvent is selected from the group consisting of alcohols, ketones, ethers and esters, preferably ethanol, acetone, methyl acetate, methyl ethyl ketone, ethyl acetate, dimethyl carbonate and mixtures of two or more thereof.

6. The method according to any one of claims 1 to 5, wherein the catalyst comprises or consists of a radical initiator, preferably Azo-bis-(isobutyronitrile) (AIBN).

7. The method according to any one of claims 1 to 6, wherein the polymerization is carried out at elevated temperature, preferably at about 70°C.

8. Vinyl acetate polymer or vinyl acetate acrylic copolymer obtainable according to the method of any one of claims 1 to 7.

9. Adhesive composition, preferably contact adhesive, comprising the vinyl acetate polymer or vinyl acetate acrylic copolymer of claim 8.

10. The adhesive composition according to claim 9, further comprising one or more additional components selected from fillers, thickeners, colorants, perfumes, preservatives, and resins.

11. Use of a vinyl acetate polymer or vinyl acetate acrylic copolymer according to claim 8 as an adhesive.
